# EUROPÄISCHE PATENTSCHRIFT

(11) **EP 3 611 081 B1**
(45) Veröffentlichungstag und Bekanntmachung des Hinweises auf die Patenterteilung: **03.05.2023**
(21) Anmeldenummer: 18188772.0
(22) Anmeldetag: 13.08.2018
(51) Int. Cl.: B62D 25/00, B62D 29/00

(54) **VORRICHTUNG ZUR VERSTÄRKUNG, ABDICHTUNG ODER DÄMPFUNG EINES STRUKTURELEMENTES**
DEVICE FOR REINFORCING, SEALING OR DAMPING OF A STRUCTURAL ELEMENT
DISPOSITIF DE RENFORCEMENT, D'ÉTANCHÉITÉ OU D'AMORTISSEMENT D'UN ÉLÉMENT STRUCTUREL

(43) Veröffentlichungstag der Anmeldung: 19.02.2020
(73) Patentinhaber: SIKA TECHNOLOGY AG, 6340 Baar (CH)
(72) Erfinder: Krucker, Roman, 8047 Zürich (CH)
(74) Vertreter: Sika Patent Attorneys

(56) Entgegenhaltungen:
- EP-A1- 0 730 999
- EP-A1- 2 360 002
- WO-A1-2013/142145
- WO-A1-2014/095620
- US-A1- 2011 076 435
- US-A1- 2016 229 457

## Beschreibung

Die Erfindung betrifft eine Vorrichtung zur Verstärkung, Abdichtung oder Dämpfung eines Strukturelementes mit einem Träger und einem Klebstoff. Sie betrifft des Weiteren ein System mit einem Strukturelement und einer darin angeordneten Vorrichtung zur Verstärkung, Abdichtung oder Dämpfung des Strukturelementes.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen. Solche Bauelemente sind von US 2016/229457 und US2011/076435 bekannt.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

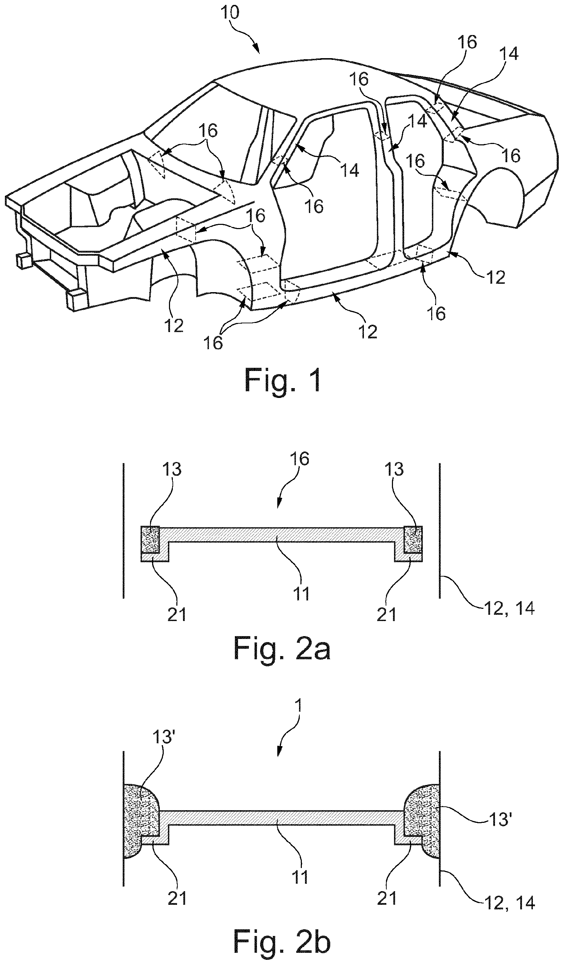

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Fig. 2a und 2b zeigen schematisch ein bekanntes Konzept zum abdichtenden und/oder verstärkenden Verschluss von Öffnungen bzw. Hohlräumen in einem Kraftfahrzeug. Dabei zeigt die Fig. 2a eine Vorrichtung 16 vor einer Expansion eines Klebstoffes 13. Fig. 2b zeigt dieselbe Vorrichtung 16 als Bestandteil des Systems 1, jedoch nach einer Expansion des Klebstoffes 13, also mit dem expandierten Klebstoff 13'.

Die Vorrichtung 16 befindet sich in einem Hohlraum einer Karosseriestruktur, wie sie beispielsweise in Fig. 1 dargestellt ist. Ein Abschnitt eines solchen Strukturelements 12, 14 einer Karosserie ist in den Fig. 2a und 2b schematisch dargestellt. Die Vorrichtung 16 umfasst einen Träger 11, welcher einen Randbereich 21 hat. Der Klebstoff 13 ist dabei im Wesentlichen auf diesem Randbereich 21 des Trägers 11 angeordnet.

Vor der Expansion des Klebstoffes 13 besteht zwischen der Vorrichtung 16 und dem Strukturelement 12, 14 ein Spalt. Dieser Spalt erlaubt es, das Strukturelement 12, 14 zu beschichten, um einen Korrosionsschutz des Strukturelementes 12, 14 zu erreichen. Nach dieser Beschichtung wird der Klebstoff 13 üblicherweise durch eine Wärmeeinwirkung expandiert, wobei der expandierte Klebstoff 13' dadurch den Spalt zwischen der Vorrichtung 16 und dem Strukturelement 12, 14 schliesst. Zudem wird durch die Expansion des Klebstoffes 13 auch zugleich eine Fixierung der Vorrichtung 16' im Strukturelement 12, 14 erreicht. Eine derart im Strukturelement 12, 14 befestigte Vorrichtung 16' verstärkt einerseits das Strukturelement 12, 14 und verschliesst andererseits den Hohlraum im Strukturelement 12, 14.

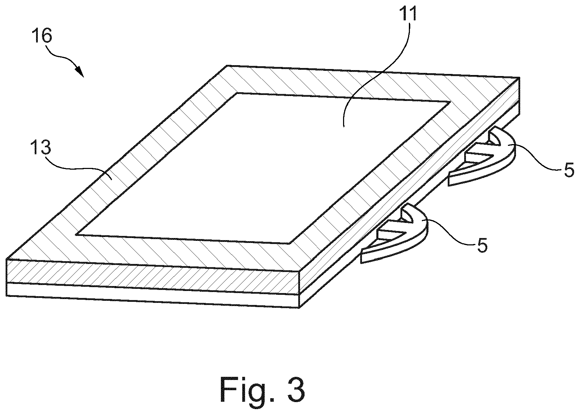

In Fig. 3 ist schematisch eine weitere bekannte Vorrichtung 16 umfassend einen Träger 11 und einen expandierbaren Klebstoff 13 dargestellt. Die Vorrichtung 16 umfasst Clips 5 zur Vorfixierung der Vorrichtung 16 im Strukturelement 12, 14. In Fig. 3 sind zwei solche Clips 5 seitlich an einer Seitenfläche des Trägers 11 angeordnet.

Nachteilig an solch bekannten Vorrichtungen ist es, dass die Clips zur Vorfixierung der Vorrichtung im Strukturelement eine gewisse Bauhöhe aufweisen, welche auf einer anderen Seite des Strukturelementes hinausragt. Es gibt jedoch verschiedentliche Anwendungen solcher Vorrichtungen, bei welchen eine möglichst geringe Bauhöhe des Befestigungselementes zur Vorfixierung der Vorrichtung wünschenswert ist.

Der Erfindung liegt daher die Aufgabe zugrunde, eine verbesserte Vorrichtung zur Verstärkung, Abdichtung oder Dämpfung eines Strukturelementes zur Verfügung zu stellen, welche die oben genannten Nachteile nicht aufweist. Insbesondere soll die Vorrichtung im Bereich eines Befestigungselementes zur Vorfixierung der Vorrichtung in einem Strukturelement verbessert werden. Zudem soll die Vorrichtung weiterhin kostengünstig und effizient in der Herstellung sein.

Diese Aufgabe wird gelöst durch eine Vorrichtung zur Verstärkung, Abdichtung oder Dämpfung eines Strukturelementes in einem Kraftfahrzeug, umfassend: einen Träger; einen Clip zur Vorfixierung des Trägers im Strukturelement; und einen Klebstoff zur Verbindung des Trägers mit dem Strukturelement; wobei der Clip als vom Träger separates Element ausgebildet ist, und wobei der Träger ein Aufnahmeelement umfasst, in welches der Clip zur Vorfixierung des Trägers im Strukturelement einführbar ist.

Diese Lösung hat den Vorteil, dass dadurch eine Bauhöhe der Vorrichtung auf einer der Vorrichtung gegenüberliegenden Seite des Strukturelementes wesentlich verringert werden kann. Indem eine Einführrichtung des Clips in eine Öffnung des Strukturelementes umgekehrt wird, ragt ein Kopf des Clips über das Strukturelement hinaus, und nicht, wie im Stand der Technik, der Schaft mit den beweglichen Lamellen. Der Kopf eines Clips kann deutlich weniger hoch ausgebildet werden als der Schaft mit den Lamellen, weil der Kopf keine beweglichen Elemente umfasst wie die Lamellen, welche in Richtung des Schaftes einen Bewegungsspielraum benötigen.

Diese Lösung bietet weiterhin den Vorteil, dass durch das separate Ausbilden von Träger und Clip unterschiedliche Materialien für den Träger und den Clip gewählt werden können. Beispielsweise kann, was für gewisse Anwendungen wünschenswert ist, für den Träger ein festeres, jedoch brüchigeres Material gewählt werden, und für den Clip kann ein weicheres, jedoch weniger brüchiges Material gewählt werden. So können die Materialien von Träger und Clip auf die jeweiligen Anforderungen optimal ausgerichtet werden.

Weiterhin bietet die hier vorgeschlagene Lösung den Vorteil, dass dadurch auf einfache Art und Weise ein zweites Element zusätzlich zum Träger am Strukturelement mit demselben Clip vorfixiert werden kann. Insbesondere kann ein solches zweites Element auf einer dem Träger gegenüberliegenden Seite des Strukturelementes vorfixiert werden mit dem einen Clip. Dies bietet den Vorteil, dass dadurch auf kosteneffiziente Weise ein zweiter Hohlraum eines Strukturelementes verstärkt, abgedichtet oder gedämpft werden kann.

In einer beispielhaften Ausführungsform hat der Clip einen Kopf, einen Schaft und am Schaft angeordnete Lamellen.

In einer beispielhaften Ausführungsform hat der Kopf des Clips eine Dicke von höchstens 5 mm, oder von höchstens 4 mm, oder von höchstens 3 mm, oder von höchstens 2 mm, oder von 1 bis 5 mm, oder von 1 bis 4 mm, oder von 1 bis 3 mm.

Dies bietet den Vorteil, dass dadurch eine besonders geringe Bauhöhe der Vorrichtung auf einer dem Träger gegenüberliegenden Seite des Strukturelementes erreicht werden kann. Insbesondere ragt dabei die Vorrichtung lediglich durch die Dicke des Kopfes des Clips über das Strukturelement hinaus.

In einer beispielhaften Ausführungsform sind die Lamellen vom Schaft ausgehend schräg zum Kopf des Clips hin ausgerichtet.

In einer beispielhaften Ausführungsform sind die Lamellen jeweils paarweise am Schaft angeordnet, wobei die Lamellen eines Paares auf im Wesentlichen entgegengesetzten Seiten des Schaftes angeordnet sind.

In einer beispielhaften Weiterbildung hat der Clip zumindest ein Lamellenpaar, oder zumindest zwei Lamellenpaare, oder zumindest drei Lamellenpaare, oder zumindest vier Lamellenpaare, oder zumindest fünf Lamellenpaare, oder zumindest sechs Lamellenpaare, oder zumindest sieben Lamellenpaare, oder zumindest acht Lamellenpaare, oder zumindest neun Lamellenpaare oder oder zumindest zehn Lamellenpaare.

In einer bevorzugten Weiterbildung hat der Clip zwischen fünf und zwanzig Lamellenpaaren, oder zwischen sieben und siebzehn Lamellenpaaren, oder zwischen zehn und fünfzehn Lamellenpaaren.

In einer beispielhaften Ausführungsform hat der Schaft eine Länge von 8 bis 24 mm, bevorzugt von 10 bis 20 mm, besonders bevorzugt von 10 bis 15 mm.

In einer beispielhaften Ausführungsform hat der Schaft eine Dicke von 3 bis 15 mm, bevorzugt von 4 bis 13 mm, besonders bevorzugt von 5 bis 10 mm.

In einer beispielhaften Ausführungsform hat das Aufnahmeelement seitlich angeordnete Lamellen, welche derart ausgebildet sind, dass sie in einem Verwendungszustand in die Lamellen des Clips eingreifen und dadurch den Clip und den Träger relativ zueinander fixieren.

In einer beispielhaften Weiterbildung hat das Aufnahmeelement jeweils Lamellenpaare, welche auf gegenüberliegenden Seitenwänden des Aufnahmeelementes angeordnet sind.

In einer beispielhaften Weiterbildung hat das Aufnahmeelement mehrere übereinander angeordnete solche Lamellenpaare, insbesondere zwischen zwei und zehn, drei und neun oder zwischen vier und acht Lamellenpaare.

In einer beispielhaften Ausführungsform weist der Clip und eine Öffnung des Aufnahmeelementes einen asymmetrischen Querschnitt auf.

In einer beispielhaften Weiterbildung hat der Querschnitt eine asymmetrisch angeordnete Ausbuchtung oder nicht parallele Seitenlinien, oder ist anderweitig unregelmässig geformt.

Das Vorsehen von solch asymmetrischen Querschnitten hat den Vorteil, dass dadurch eine Verdrehsicherung gewährleistet ist. Insbesondere kann dadurch die Vorrichtung nicht in einer gedrehten Position im Strukturelement vorfixiert werden.

In einer beispielhaften Weiterbildung sind die Querschnitte des Clips und die Öffnung des Aufnahmeelementes im Wesentlichen deckungsgleich. Dabei ist insbesondere der Querschnitt des Clips im Bereich der Lamellen etwas grösser als der Querschnitt des Aufnahmeelementes im Bereich der Lamellen des Aufnahmeelementes, so dass bei einem Einführen des Clips in das Aufnahmeelement die Lamellen ineinander verhaken.

In einer beispielhaften Ausführungsform sind das Aufnahmeelement und der Träger einstückig ausgebildet.

In einer beispielhaften Ausführungsform sind das Aufnahmeelement und der Träger aus demselben Material ausgebildet.

Dies hat jeweils den Vorteil, dass das Aufnahmeelement integral mit dem Träger hergestellt werden kann, beispielsweise durch ein Spritzgussverfahren.

In einer beispielhaften Ausführungsform ist der Klebstoff ein im Wesentlichen nicht expandierbarer Klebstoff, oder ein Klebstoff mit einer Expansionsrate zwischen 50% und 500%, oder ein Klebstoff mit einer Expansionsrate zwischen 1000% und 3000%.

Je nach Anwendungszweck der Vorrichtung im Strukturelement der Karosserie kann ein unterschiedlicher Klebstoff ausgewählt werden.

In einer ersten alternativen Ausführungsform ist der Klebstoff ein im Wesentlichen nicht expandierbarer Klebstoff. Insbesondere hat der im Wesentlichen nicht expandierbare Klebstoff dabei eine Expansionsrate von weniger als ± 15%, bevorzugt von weniger als ± 10%, bevorzugt von weniger als ± 5%.

Ein beispielhaftes Material mit einer solchen im Wesentlichen nicht vorhandenen Expansionsrate ist unter dem Handelsnamen SikaPower^{®} erhältlich.

In einer zweiten alternativen Ausführungsform hat der expandierbare Klebstoff eine Expansionsrate von 800 bis 3000%. In einer beispielhaften Weiterbildung hat der expandierbare Klebstoff eine Expansionsrate von 1000 und 2700% bzw. zwischen 1500 und 2500%.

Ein beispielhaftes Material mit einer solchen Expansionsrate ist unter dem Handelsnamen SikaBaffle^{®} 455 erhältlich.

In einer dritten alternativen Ausführungsform hat der expandierbare Klebstoff eine Expansionsrate von 50 bis 500%. In einer beispielhaften Weiterbildung hat der expandierbare Klebstoff eine Expansionsrate von 70 und 400% bzw. zwischen 100 und 300%.

Ein beispielhaftes Material mit einer solchen Expansionsrate ist unter dem Handelsnamen SikaReinforcer^{®} 940 erhältlich.

In einer beispielhaften Ausführungsform ist der Klebstoff und/oder der Träger durch ein Spritzgussverfahren hergestellt.

Dies hat den Vorteil, dass dadurch eine kosteneffiziente Vorrichtung herstellbar ist.

In einer beispielhaften Ausführungsform ist der Clip durch ein Spritzgussverfahren hergestellt.

In einer beispielhaften Ausführungsform ist der Clip aus einem anderen Material als der Träger ausgebildet.

In einer beispielhaften Weiterbildung ist der Clip aus einem Material mit einer höheren Biegefestigkeit ausgebildet als der Träger.

Dies hat den Vorteil, dass dadurch das Material für den Clip und das Material für den Träger optimal an deren Funktion angepasst werden kann.

In einer beispielhaften Ausführungsform umfasst der Träger einen Kunststoff, insbesondere Polyamid, und insbesondere einen faserverstärkten Kunststoff, beispielsweise ein glasfaserverstärkter oder karbonfaserverstärkter Kunststoff.

In einer beispielhaften Ausführungsform bildet der Klebstoff ein einziges zusammenhängendes Element. In einer alternativen Ausführungsform bilden mehrere nicht zusammenhängende Klebstoffe mehrere nicht zusammenhängende Elemente.

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet. Auch Kombinationen mit Fasern, wie beispielsweise Glasfasern oder Karbonfasern, sind möglich.

Weiterhin kann der Träger einen beliebigen Aufbau und eine beliebige Struktur aufweisen. Er kann beispielsweise massiv, hohl, oder geschäumt sein oder eine gitterartige Struktur aufweisen. Die Oberfläche des Trägers kann typischerweise glatt, rau oder strukturiert sein.

Bei erfindungsgemässen Abdichtungs- und Verstärkungselementen, bei welchen sich das expandierbare Material auf einem Träger befindet, unterscheidet sich das Herstellungsverfahren dementsprechend, ob der Träger aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall das Trägerelement, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall der Klebstoff, wird mit einem zweiten Spritzaggregat an die erste Komponente angespritzt.

Besteht das Trägerelement aus einem Material, welches sich nicht durch das Spritzgussverfahren herstellen lässt, also beispielsweise aus einem Metall, wird der Träger in ein entsprechendes Werkzeug gelegt und der Klebstoff wird an den Träger angespritzt. Selbstverständlich besteht auch die Möglichkeit den Klebstoff durch spezielle Befestigungsmittel oder -verfahren an dem Träger zu befestigen.

Die eingangs gestellte Aufgabe wird weiterhin gelöst durch ein System eines verstärkten, abgedichteten oder gedämpften Strukturelementes in einem Kraftfahrzeug, das System umfassend: ein Strukturelement; eine Vorrichtung nach obiger Beschreibung, wobei die Vorrichtung im Strukturelement angeordnet ist; und wobei der Klebstoff den Träger und das Strukturelement miteinander verbindet.

In einer beispielhaften Ausführungsform ragt die Vorrichtung auf einer ersten Seite des Strukturelementes lediglich durch den Kopf des Clips in einen ersten Hohlraum hinein.

Dies hat den Vorteil, dass dadurch Systeme zur Verfügung gestellt werden können, bei welchen die Vorrichtung möglichst wenig über das Strukturelement hinausragt, auf einer dem Träger gegenüberliegenden Seite des Strukturelementes.

In einer beispielhaften Ausführungsform fixiert der Clip neben dem Träger ein zweites Element am Strukturelement, wobei dieses zweite Element und der Träger auf gegenüberliegenden Seiten des Strukturelementes angeordnet sind, an welchem sie fixiert sind.

Dies hat den Vorteil, dass dadurch ein zweiter Hohlraum verstärkt, abgedichtet oder gedämpft werden kann durch das hier vorgeschlagene System.

In einer beispielhaften Weiterbildung umfasst das zweite Element einen expandierbaren Klebstoff.

In einer beispielhaften Weiterbildung ist das zweite Element durch ein Extrusionsverfahren hergestellt.

In einer beispielhaften Weiterbildung hat das zweite Element keinen Träger oder hat das zweite Element einen flexiblen Träger, welcher weniger als 7 mm, oder weniger als 5 mm, oder zwischen 1 und 7 mm, oder zwischen 2 und 5 mm, dick ist.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie gemäss Stand der Technik;
- Fig. 2a und 2b: schematische Darstellung einer beispielhaften Vorrichtung gemäss Stand der Technik;
- Fig. 3: schematische Darstellung einer beispielhaften Vorrichtung gemäss Stand der Technik;
- Fig. 4: schematische Darstellung eines beispielhaften Clips in einem beispielhaften Aufnahmeelement;
- Fig. 5: schematische Darstellung eines beispielhaften Aufnahmeelementes in Draufsicht; und
- Fig. 6a und 6b: schematische Darstellung eines Querschnitts eines beispielhaften Systems mit einer beispielhaften Vorrichtung.

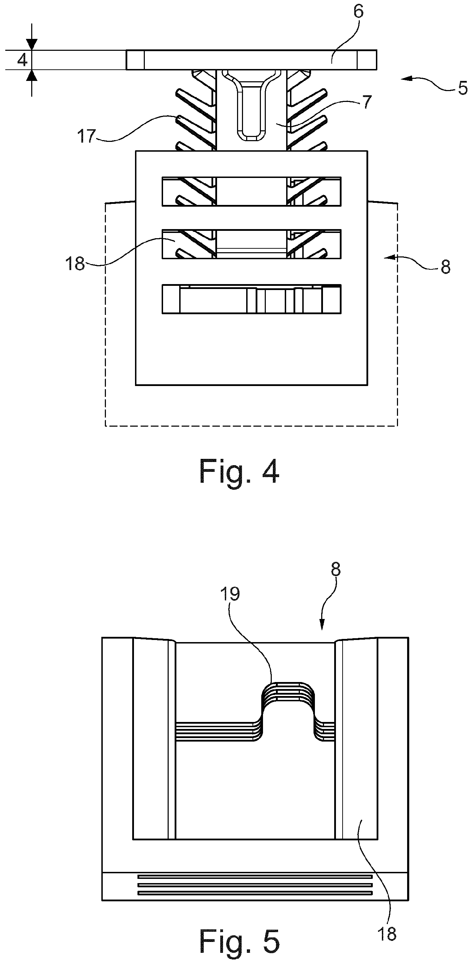

In Fig. 4 ist beispielhaft und schematisch ein Clip 5 in einem Aufnahmeelement 8 dargestellt. Der Clip 5 hat dabei einen Kopf 6, einen Schaft 7 und am Schaft 7 angeordnete Lamellen 17. In diesem Ausführungsbeispiel hat der Clip 5 sieben Lamellenpaare 17, welche jeweils zwei Lamellen umfassen, welche an gegenüberliegenden Seiten des Schaftes 7 angeordnet sind. Die Lamellen 17 sind zudem vom Schaft 7 ausgehend schräg zum Kopf 6 des Clips ausgerichtet. Der Kopf 6 des Clips 5 hat eine Dicke 4. Diese Dicke 4 des Kopfes 6 ragt in einem Verwendungszustand des Clips 5 über das Strukturelement hinaus, auf der dem Träger mit dem Aufnahmeelement 8 gegenüberliegenden Seite des Strukturelementes.

Das Aufnahmeelement 8 hat seitlich angeordnete Lamellen 18, welche in die Lamellen 17 des Clips 5 eingreifen. Dadurch kann der Clip 5 mit einer gewissen Kraft in das Aufnahmeelement 8 eingeführt werden, ist jedoch gegen ein Herausziehen gesichert.

In Fig. 5 ist beispielhaft und schematisch ein Aufnahmeelement 8 in Draufsicht dargestellt. Dabei sind wiederum Lamellenpaare 18 an seitlichen Wänden des Aufnahmeelementes 8 angeordnet. Das Aufnahmeelement 8 hat eine Öffnung 19 zur Einführung des Clips in das Aufnahmeelement 8. Diese Öffnung 19 ist in diesem Ausführungsbeispiel asymmetrisch ausgebildet, hier konkret mit einer asymmetrisch angeordneten Ausbuchtung. Der Clip weist dabei ebenfalls einen im Wesentlichen deckungsgleichen Querschnitt zur Öffnung 19 des Aufnahmeelementes 8 auf, so dass Clip und Aufnahmeelement 8 nur in einer bestimmten räumlichen Lage ineinander einführbar sind.

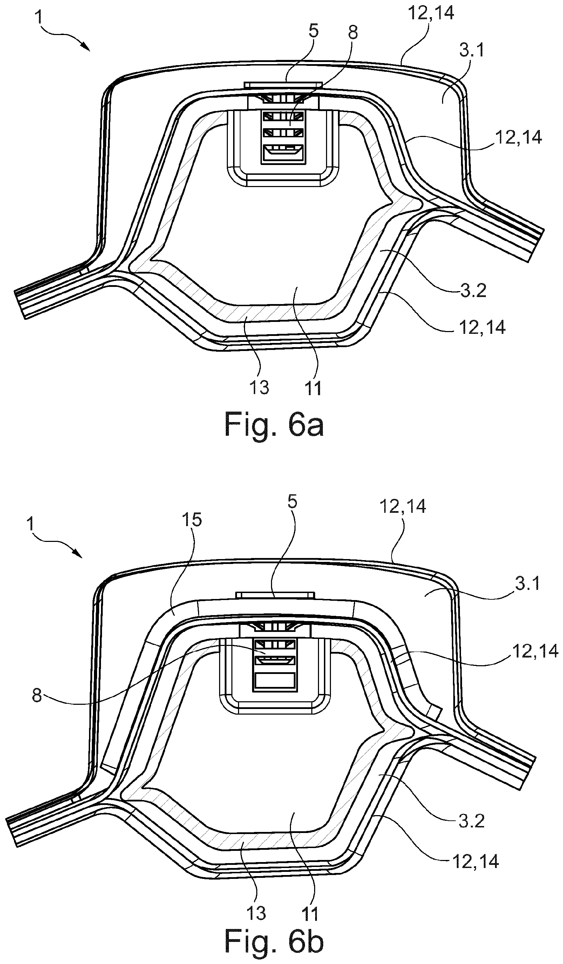

In den Fig. 6a und 6b ist jeweils ein System 1 eines verstärkten, abgedichteten oder gedämpften Strukturelementes 12, 14 schematisch und beispielhaft dargestellt. In diesen Ausführungsbeispielen umfasst das Strukturelement 12, 14 jeweils ein äusseres, ein mittleres und ein inneres Blech auf. Dabei ist die Vorrichtung am mittleren Strukturelement 12, 14 vorfixiert. Der Clip 5 ist dabei durch eine Öffnung (nicht sichtbar in dieser Darstellung) im Strukturelement 12, 14 hindurchgeführt, und auf der anderen Seite des Strukturelementes 12, 14 in das Aufnahmeelement 8 des Trägers 11 eingeführt. Dadurch wird die Vorrichtung am Strukturelement 12, 14 vorfixiert.

In diesen Ausführungsbeispielen sind der Träger 11 und das Aufnahmeelement 8 jeweils einstückig und aus demselben Material ausgebildet.

In Fig. 6a wird lediglich ein zweiter Hohlraum 3.2 des Strukturelementes 12, 14 verstärkt, abgedichtet oder gedämpft durch die Vorrichtung. In Fig. 6b werden sowohl der zweite Hohlraum 3.2 wie auch ein erster Hohlraum 3.1 verstärkt, abgedichtet oder gedämpft. Dabei ist ein zweites Element 15 auf einer dem Träger 11 gegenüberliegenden Seite des mittleren Strukturelementes 12, 14 angeordnet. Das zweite Element 15 ist dabei ebenfalls durch den Clip 5 am Strukturelement 12, 14 fixiert. Dabei ist der Clip 5 durch eine Öffnung im zweiten Element 15 geführt.

Das zweite Element 15 ist in diesem Ausführungsbeispiel als Extrusionsband eines expandierbaren Klebstoffes ausgebildet. In einem alternativen nicht dargestellten Ausführungsbeispiel ist das zweite Element ein Zweikomponenten Bauteil, insbesondere ein durch Zweikomponenten-Spritzguss hergestelltes Bauteil, mit einem Träger und einem expandierbaren Klebstoff.

### Bezugszeichenliste

- 1: System
- 3.1: erster Hohlraum
- 3.2: zweiter Hohlraum
- 4: Dicke des Kopfes
- 5: Clip
- 6: Kopf
- 7: Schaft
- 8: Aufnahmeelement
- 10: Karosserie
- 11: Träger
- 12: Strukturelement
- 13: Klebstoff
- 14: Strukturelement
- 15: zweites Element
- 16: Vorrichtung
- 17: Lamellen des Clips
- 18: Lamellen des Aufnahmeelementes
- 19: Öffnung des Aufnahmeelementes
- 21: Randbereich des Trägers

## Patentansprüche

1. System (1) eines verstärkten, abgedichteten oder gedämpften Strukturelementes (12, 14) in einem Kraftfahrzeug, das System (1) umfassend:
ein Strukturelement (12, 14);
eine Vorrichtung (16) mit
einem Träger (11), einem Clip (5) zur Vorfixierung des Trägers (11) im Strukturelement (12, 14), und
einem Klebstoff (13) zur Verbindung des Trägers (11) mit dem Strukturelement (12, 14);
wobei der Clip (5) als vom Träger (11) separates Element ausgebildet ist, wobei der Träger (11) ein Aufnahmeelement (8) umfasst, in welches der Clip (5) zur Vorfixierung des Trägers (11) im Strukturelement (12, 14) einführbar ist,
wobei die Vorrichtung (16) im Strukturelement (12, 14) angeordnet ist; und
wobei der Klebstoff (13) den Träger (11) und das Strukturelement (12, 14) miteinander verbindet,
**dadurch gekennzeichnet, dass**
der Clip (5) einen Kopf (6), einen Schaft (7) und am Schaft (7) angeordnete Lamellen (17) hat, und dass die Vorrichtung (16) auf einer ersten Seite des Strukturelementes (12, 14) lediglich durch den Kopf (6) des Clips (5) in einen ersten Hohlraum (3.1) hineinragt.

2. System nach Anspruch 1, wobei der Kopf (6) eine Dicke (4) von höchstens 5 mm hat.

3. System nach einem der Ansprüche 1 oder 2, wobei der Schaft (7) des Clips (5) zwischen 8 und 24 mm lang ist und/oder wobei der Schaft (7) des Clips (5) zwischen 3 und 15 mm dick ist.

4. System nach einem der vorhergehenden Ansprüche, wobei das Aufnahmeelement (8) seitlich angeordnete Lamellen (18) hat, welche derart ausgebildet sind, dass sie in einem Verwendungszustand in die Lamellen (17) des Clips (5) eingreifen und dadurch den Clip (5) und den Träger (11) mit dem Aufnahmeelement (8) relativ zueinander fixieren.

5. System nach einem der vorhergehenden Ansprüche, wobei der Clip (5) und eine Öffnung (19) des Aufnahmeelementes (8) einen asymmetrischen Querschnitt aufweisen, wobei insbesondere die Querschnitte im Wesentlichen deckungsgleich sind.

6. System nach einem der vorhergehenden Ansprüche, wobei das Aufnahmeelement (8) und der Träger (11) einstückig und/oder aus demselben Material ausgebildet sind.

7. System nach einem der vorhergehenden Ansprüche, wobei der Klebstoff (13) ein im Wesentlichen nicht expandierbarer Klebstoff ist, oder ein Klebstoff (13) mit einer Expansionsrate zwischen 50% und 500% ist, oder ein Klebstoff (13) mit einer Expansionsrate zwischen 800% und 3000% ist.

8. System nach einem der vorhergehenden Ansprüche, wobei der Klebstoff (13) und/oder der Träger (11) und/oder der Clip (5) durch ein Spritzgussverfahren hergestellt ist.

9. System nach einem der vorhergehenden Ansprüche, wobei der Träger (11) einen Kunststoff, oder einen faserverstärkten Kunststoff, oder ein Polyamid, umfasst.

10. System nach einem der vorhergehenden Ansprüche, wobei der Clip (5) aus einem anderen Material als der Träger (11) ausgebildet ist, und/oder wobei der Clip (5) aus einem Material mit einer höheren Biegefestigkeit ausgebildet ist als der Träger (11).

11. System nach einem der vorhergehenden Ansprüche, wobei der Clip (5) neben dem Träger (11) ein zweites Element (15) am Strukturelement (12, 14) fixiert, wobei dieses zweite Element (15) und der Träger (11) auf gegenüberliegenden Seiten des Strukturelementes (12, 14) angeordnet sind, an welchem sie fixiert sind.

12. System nach Anspruch 11, wobei das zweite Element (15) einen expandierbaren Klebstoff umfasst, und/oder wobei das zweite Element (15) durch ein Extrusionsverfahren hergestellt ist.

## Claims

1. System (1) of a reinforced, sealed or damped structural element (12, 14) in a motor vehicle, the system (1) comprising:
a structural element (12, 14);
a device (16), having
a carrier (11), a clip (5) for pre-fixing the carrier (11) in the structural element (12, 14), and
an adhesive (13) for bonding the carrier (11) to the structural element (12, 14);
wherein the clip (5) is in the form of a separate element to the carrier (11), wherein the carrier (11) comprises a receiving element (8) into which the clip (5) can be introduced to pre-fix the carrier (11) in the structural element (12, 14),
wherein the device (16) is arranged in the structural element (12, 14); and
wherein the adhesive (13) bonds the carrier (11) and the structural element (12, 14) to one another,
**characterized in that**
the clip (5) has a head (6), a shaft (7), and lamellae (17) arranged on the shaft (7), and **in that**, on a first side of the structural element (12, 14), the device (16) projects into a first cavity (3.1) merely by way of the head (6) of the clip (5).

2. System according to Claim 1, wherein the head (6) has a thickness (4) of at most 5 mm.

3. System according to either of Claims 1 and 2, wherein the shaft (7) of the clip (5) is between 8 mm and 24 mm long, and/or wherein the shaft (7) of the clip (5) is between 3 mm and 15 mm thick.

4. System according to one of the preceding claims, wherein the receiving element (8) has laterally arranged lamellae (18) which are formed in such a way that, in a use state, they engage in the lamellae (17) of the clip (5) and thereby fix the clip (5) and the carrier (11) with the receiving element (8) relative to one another.

5. System according to one of the preceding claims, wherein the clip (5) and an opening (19) in the receiving element (8) have an asymmetrical cross section, wherein in particular the cross sections are substantially congruent.

6. System according to one of the preceding claims, wherein the receiving element (8) and the carrier (11) are formed in one piece and/or made from the same material.

7. System according to one of the preceding claims, wherein the adhesive (13) is a substantially non-expandable adhesive, or is an adhesive (13) with an expansion rate between 50% and 500%, or is an adhesive (13) with an expansion rate between 800% and 3000%.

8. System according to one of the preceding claims, wherein the adhesive (13) and/or the carrier (11) and/or the clip (5) is produced by an injection moulding process.

9. System according to one of the preceding claims, wherein the carrier (11) comprises a plastic, or a fibre-reinforced plastic, or a polyamide.

10. System according to one of the preceding claims, wherein the clip (5) is made from a different material to the carrier (11), and/or wherein the clip (5) is made from a material with a higher flexural strength than the carrier (11).

11. System according to one of the preceding claims, wherein the clip (5), in addition to the carrier (11), fixes a second element (15) to the structural element (12, 14), wherein this second element (15) and the carrier (11) are arranged on opposite sides of the structural element (12, 14) to which they are fixed.

12. System according to Claim 11, wherein the second element (15) comprises an expandable adhesive, and/or wherein the second element (15) is produced by an extrusion process.

## Revendications

1. Système (1) d'un élément structurel renforcé, étanchéifié ou amorti (12, 14) dans un véhicule automobile, le système (1) comprenant :
un élément structurel (12, 14) ;
un dispositif (16) avec
un support (11), un clip (5) pour la fixation préliminaire du support (11) dans l'élément structurel (12, 14), et
un adhésif (13) pour la liaison du support (11) à l'élément structurel (12, 14) ;
dans lequel le clip (5) est réalisé sous forme d'élément séparé du support (11), dans lequel le support (11) comprend un élément de réception (8) dans lequel le clip (5) peut être introduit pour la fixation préliminaire du support (11) dans l'élément structurel (12, 14),
dans lequel le dispositif (16) est agencé dans l'élément structurel (12, 14) ; et
dans lequel l'adhésif (13) relie le support (11) et l'élément structurel (12, 14) entre eux,
**caractérisé en ce que**
le clip (5) a une tête (6), une tige (7) et des lamelles (17) agencées sur la tige (7), et **en ce que** le dispositif (16) fait saillie sur un premier côté de l'élément structurel (12, 14) uniquement à travers la tête (6) du clip (5) dans une première cavité (3.1).

2. Système selon la revendication 1, dans lequel la tête (6) a une épaisseur (4) d'au plus 5 mm.

3. Système selon l'une quelconque des revendications 1 ou 2, dans lequel la tige (7) du clip (5) a une longueur comprise entre 8 et 24 mm et/ou dans lequel la tige (7) du clip (5) a une épaisseur comprise entre 3 et 15 mm.

4. Système selon l'une quelconque des revendications précédentes, dans lequel l'élément de réception (8) a des lamelles (18) agencées latéralement, qui sont réalisées de telle sorte que, dans un état d'utilisation, elles s'engagent dans les lamelles (17) du clip (5) et fixent ainsi le clip (5) et le support (11) avec l'élément de réception (8) l'un par rapport à l'autre.

5. Système selon l'une quelconque des revendications précédentes, dans lequel le clip (5) et une ouverture (19) de l'élément de réception (8) présentent une section transversale asymétrique, dans lequel les sections transversales sont notamment essentiellement coïncidentes.

6. Système selon l'une quelconque des revendications précédentes, dans lequel l'élément de réception (8) et le support (11) sont réalisés d'un seul tenant et/ou dans le même matériau.

7. Système selon l'une quelconque des revendications précédentes, dans lequel l'adhésif (13) est un adhésif essentiellement non expansible, ou un adhésif (13) ayant un taux d'expansion compris entre 50 % et 500 %, ou un adhésif (13) ayant un taux d'expansion compris entre 800 % et 3 000 %.

8. Système selon l'une quelconque des revendications précédentes, dans lequel l'adhésif (13) et/ou le support (11) et/ou le clip (5) sont fabriqués par un procédé de moulage par injection.

9. Système selon l'une quelconque des revendications précédentes, dans lequel le support (11) comprend une matière plastique, ou une matière plastique renforcée par des fibres, ou un polyamide.

10. Système selon l'une quelconque des revendications précédentes, dans lequel le clip (5) est réalisé dans un matériau différent de celui du support (11) et/ou dans lequel le clip (5) est réalisé dans un matériau ayant une résistance à la flexion plus élevée que le support (11).

11. Système selon l'une quelconque des revendications précédentes, dans lequel le clip (5) fixe un deuxième élément (15) à l'élément structurel (12, 14) en plus du support (11), ce deuxième élément (15) et le support (11) étant agencés sur des côtés opposés de l'élément structurel (12, 14) auquel ils sont fixés.

12. Système selon la revendication 11, dans lequel le deuxième élément (15) comprend un adhésif expansible et/ou dans lequel le deuxième élément (15) est fabriqué par un procédé d'extrusion.
